Europäisches Patentamt

European Patent Office

Office européen des brevets

(11) Publication number: **0 280 405 B1**

(12) **EUROPEAN PATENT SPECIFICATION**

(45) Date of publication of patent specification: **11.05.94** (51) Int. Cl.⁵: **G08B 3/10, H04Q 7/02**

(21) Application number: **88300662.9**

(22) Date of filing: **27.01.88**

(54) Method for distinguishing between successively arrived messages and a pager incorporating the method.

(30) Priority: **29.01.87 JP 17390/87**

(43) Date of publication of application:
**31.08.88 Bulletin 88/35**

(45) Publication of the grant of the patent:
**11.05.94 Bulletin 94/19**

(84) Designated Contracting States:
**GB NL SE**

(56) References cited:
**EP-A- 0 193 188**
**WO-A-86/03317**
**WO-A-86/03318**
**WO-A-86/04476**
**GB-A- 1 471 953**

(73) Proprietor: **NEC CORPORATION**
**7-1, Shiba 5-chome**
**Minato-ku**
**Tokyo 108-01(JP)**

(72) Inventor: **Sato, Toshifumi c/o NEC Corporation**
**33-1, Shiba 5-chome**
**Minato-ku Tokyo(JP)**
Inventor: **Ide, Motoki c/o NEC Corporation**
**33-1, Shiba 5-chome**
**Minato-ku Tokyo(JP)**

(74) Representative: **Orchard, Oliver John**
**JOHN ORCHARD & CO.**
**Staple Inn Buildings North**
**High Holborn**
**London WC1V 7PZ (GB)**

## Description

BACKGROUND OF THE INVENTION

The present invention relates to a method for distinguishing between successively arrived messages. The present invention is particularly suited for use with a selective calling radio display pager.

The state of the art with regard to correction of errors in a received message is described inter alia in the specification of European Patent Application EP-A 0,193,188, published in September 3, 1986 as a radio paging device having circuitry for rewriting a stored message with error-free characters. Radio paging signals of the same message are repeatedly transmitted to increase the probability of reception. In the prior art specification, characters of each message are checked for error and error-free characters are stored in a first memory and those characters of successively received message are stored in a second memory for comparison with the characters in the first. A control circuit makes the comparison by detecting a match between all characters in the first memory with those in the second memory and replaces the characters in the second memory with those in the first memory. If the number of characters in a later message differs from the number of those in a previous message, the later message is apparently not a retransmission of the previous one and must be stored into the memory as a different message. One disadvantage of the prior art is that the control circuit performs the character-by-character comparison even though such an apparently different message is received. Since the BCH code format employed in the paging system treats a group of successive characters as containing errors even if only one of them is in error. The prior art approach disregards such error-free characters, and hence two messages which are the same are likely to be interpreted as being distinct from each other.

SUMMARY OF THE INVENTION

It is therefore an object of the present invention to provide a method for distinguishing successively received messages with high efficiency and accuracy.

In an embodiment to be described, a method is provided for distinguishing between successively arrived first and second messages each containing a series of characters. The method comprises receiving successively arrived messages and detecting an error in each character of each message to identify it as an error-containing character or error-free character. The first and second messages are stored into respective storage locations so that the characters of the first message positionally correspond with those of the second message. A first match is detected between the number of all characters contained in the first message and the number of all characters contained in the second message. A second match is detected between each of the error-free characters of the first message and each of positionally corresponding error-free characters of the second message. Comparison is then made between each of the error-free and error-containing characters of the first message and each of positionally corresponding characters of the second message and the result (match or mismatch) of each comparison is counted. Thus, comparisons are made between error-containing characters of the two messages. When the count of the results reaches a predetermined percentage of the number of all characters in each message, the first and second messages are interpreted as containing the same information. In this way, successively arrived messages can be identified with a high degree of accuracy.

The message distinguishing method is advantageously incorporated in a selective calling radio display pager. The pager comprises means for receiving the first and second messages and a memory for storing the messages into positionally corresponding storage locations. A controller detects a first match between the number of all characters contained in the first message and the number of those contained in the second message and proceeds to detect a second match between each of the error-free characters of the first message and each of positionally corresponding error-free characters of the second message and further proceeds to compare between each of the error-free and error-containing characters of the first message and each of positionally corresponding characters of the second message. The controller counts the result of comparison and determines if the count reaches the predetermined percentage, and if so, it interprets that the later one of the messages is a retransmission of the previous one. The controller includes error correction means which replaces error-containing characters of one of the messages with positionally corresponding error-free characters of the other and provides a display of the character-replaced message.

BRIEF DESCRIPTION OF THE DRAWINGS

The present invention will be described in further detail with reference to the accompanying drawings, in which:

Fig. 1 is a block diagram of a selective calling radio pager of the invention;

Fig. 2 is an illustration of the format of data employed in the present invention;

Figs. 3A and 3B are flow diagrams of programmed instructions performed by the controller of Fig. 1;

Fig. 4 is an illustration of examples useful for describing the operation of the present invention; and

Fig. 5 is an illustration of the program of the flow diagrams written by the C computer language.

## DETAILED DESCRIPTION

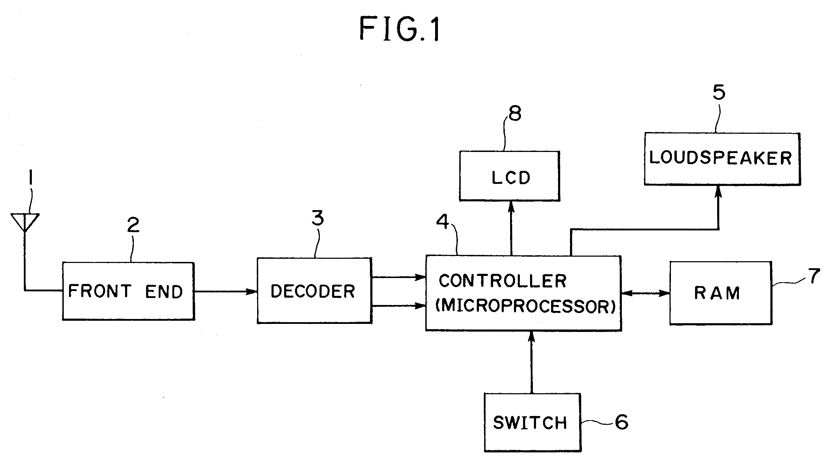

In Fig. 1, a selective calling radio display pager is shown as comprising a front end 2 which amplifies and demodulates a paging signal detected by antenna 1 and shapes the waveform of the demodulated signal into a form sharply distinguishable by a decoder 3. Decoder 3 checks the identifiers contained in the paging signal with the pager's own address stored in a memory. If a match is detected, the decoder 3 applies a message signal that follows the identifier to a controller 4, which supplies a tone signal to a loudspeaker 5 to alert the pager's owner. The alarm is turned off when manually operated switch 6 is operated. The message signal is stored into a random access memory 7 for comparison with a subsequently received message signal. A liquid crystal display 8 is connected to the controller 4 to display the message stored in the memory 7.

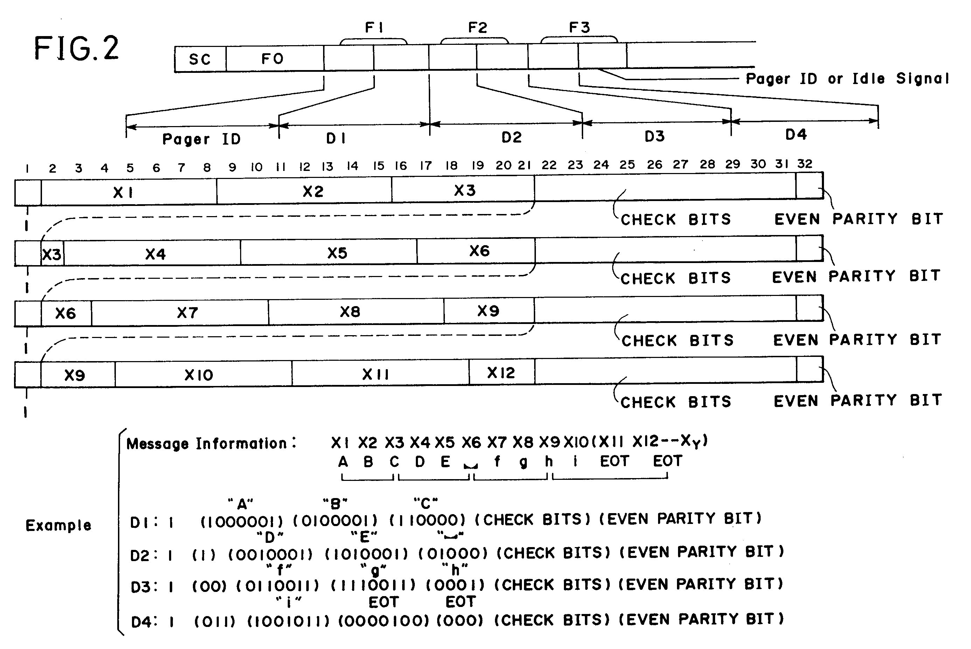

As shown in Fig. 2, the paging signal is transmitted in the format devised by the British Post Office Code Standardization Advisory Group (POCSAG) and adopted by CCIR as Radiopaging Code No. 1. A message signal is shown as a series of characters "ABCDE fghi" respectively stored in memory locations X1 through X10. Each of the characters is composed of 7 bits according to the ISO (International Standardization Organization) 646 code. The message signal is divided at 20-bit intervals into blocks each of which is combined with check bits and a parity bit to form a BCH (31, 21) code which is capable of correcting one error bit and of detecting a maximum of four bits in each code. If, for example, the character "A" is detected by decoder 3 as having two error bits, the first three characters "ABC" are treated as containing errors and the decoder 3 supplies an error flag to the controller 4 along with the characters.

Random access memory 7 has at least two message storage areas A and B for storing the message of a later arrival and the same message of a previous arrival, respectively. In a manner described hereinbelow, controller 4 performs character-by-character comparison between the successively arrived messages to distinguish between them and replace error-containing characters of one of the messages with error-free characters of the other message if these messages are interpreted as being identical to each other, and displays the corrected message.

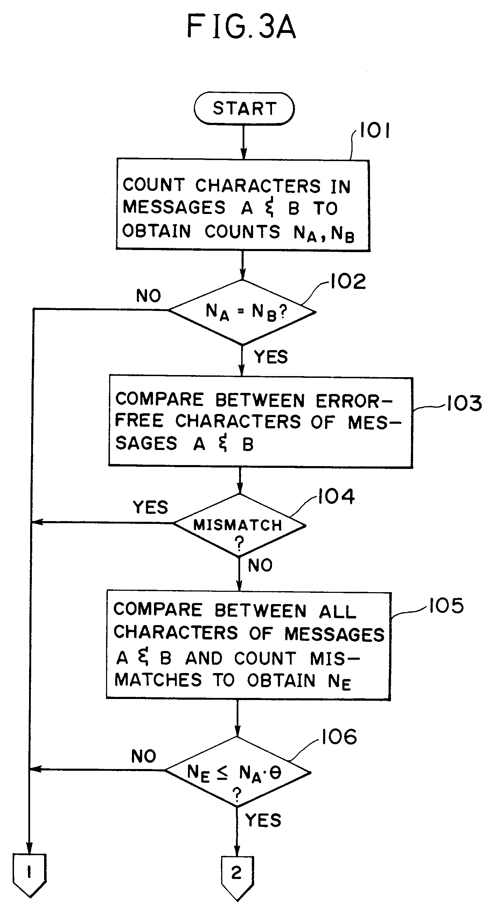

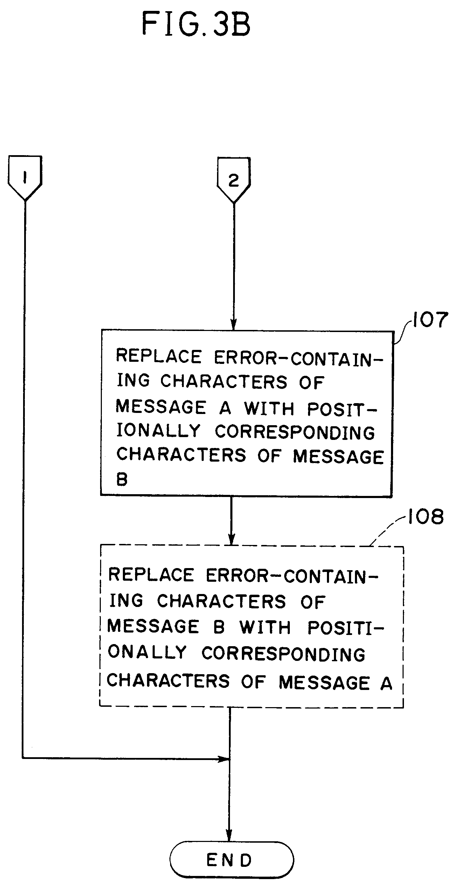

Referring to Figs. 3A and. 3B, flow diagrams describing the error correcting operation of the controller 4 of the present invention are illustrated. In Fig. 3A, the program starts with operations block 101 which directs the counting of characters stored in the areas A and B to obtain $N_A$ and $N_B$, respectively, representing the counts. Exit then is to decision block 102 which tests to see if $N_A = N_B$. If the answer is negative, control interprets that the later message is different from the previous one and exits the program, and if the answer is affirmative, control proceeds to operations block 103 which compares between error-free characters of the two messages. Exit then is to decision block 104 which determines whether there is a mismatch between any pair of the error-free characters of the two messages. If the answer is affirmative, control interprets that the later message is a different one and exits the program, and if the answer is negative, it advances to operations block 105 to compare between all characters of the two messages and detect mismatches $N_E$. Control exits to decision block 106 which multiplies $N_A$ by a predetermined fraction $\theta$, say 0.1 and compares it with $N_E$. If $N_E$ is equal to or smaller than $N_A . \theta$, the later message is interpreted as being a retransmission of the previous message and if not, it is interpreted as being a different one. If the answer is affirmative in block 106, exit is to operations block 107, Fig. 3B, which directs the replacing of the error-containing characters of the later message with corresponding error-free characters of the previous message. If the corresponding characters of the previous message is in error, no replacement is made. Alternatively, the error-containing characters of the previous message may be replaced with corresponding error-free characters of the later message, as shown in operations block 108.

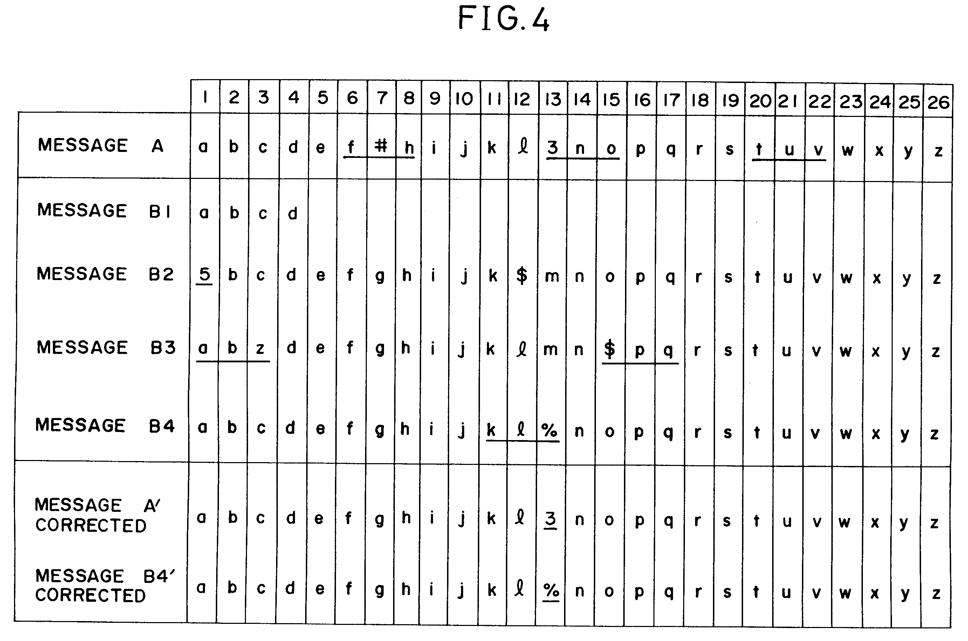

The operation of the program will be visualized with reference to Fig. 4. If the previous message is as shown at B1 and the later message is shown at A having errors indicated by underlines, the latter will be treated by decision block 102 as not being a retransmission of the previous message B1. If the previous message has one error as shown at B2, a mismatch is detected by decision block 104 between the 12th characters which are not detected as being in error and therefore the message A is treated as not being the same as the previous one. If the earlier message has two errors as shown at B3 and no mismatches exist between error-free characters, control executes operations block 105 and detects three mismatches between the 3rd, 7th and 15th characters. Since $N_A = 26$, $N_E$ is greater than $0.1 N_A$. Thus, the later message A is interpreted as being different from the previous one. If the previous message has one error as shown at B4 and no mismatches exist between error-free characters, control proceeds to block 105 as in the example above, but detects two mismatches in the 7th and 13th characters. Since $N_E$ is smaller than $0.1N_A$, the message A is treated as being a retransmission of the previous message B4, and control proceeds to block 107 where the 6th, 7th, 8th, 13th, 14th, 15th, 20th, 21st and 22nd characters of message A are replaced with corresponding error-free characters of message B4 as shown at A' with the 13th character of message A being left unchanged since the 13th character of message B4 contains an error ("%"). Alternatively, the 11th and 12th characters of message B4 may be replaced with error-free characters of message A as shown at B4' with the 13th character of message B4 being left unchanged.

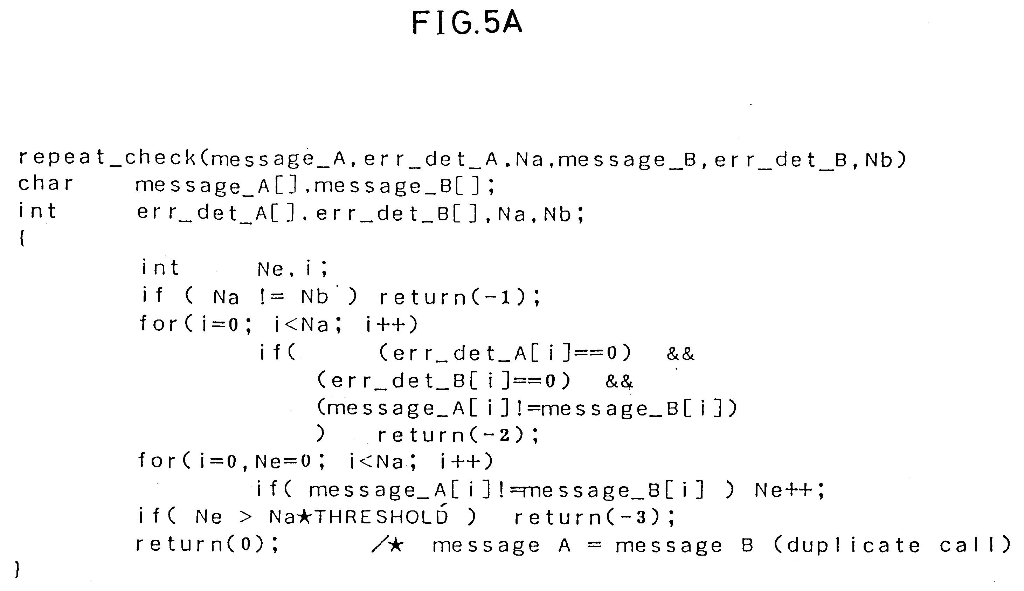

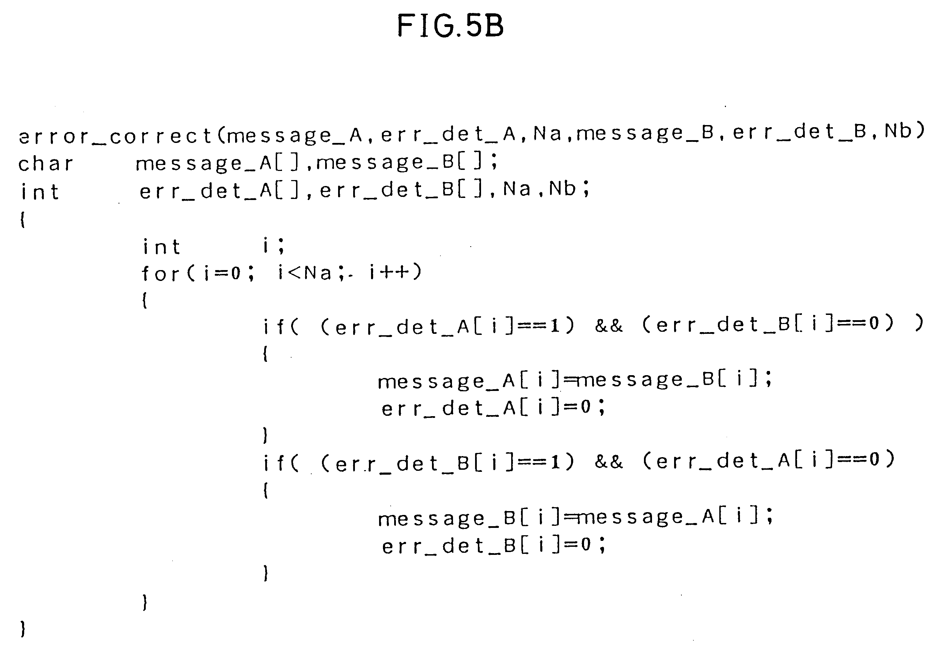

Fig. 5 is an illustration of a computer program written by the C programming language for executing the flow diagrams of Figs. 3A and 3B. Part (A) of Fig. 5 shows a sequence in which it determines whether the later message is a retransmission of the earlier one or not, and part (B) shows a sequence in which error-containing characters are replaced. In Fig. 5, the following arguments are used:

| | |
|---|---|
| message-A: | matrix containing the characters of message A |
| err-det-A: | matrix containing an error-detecting flag of message A (err-det-A[n] = 1 indicates that the n-th character of message A is in error, and err-det-A[n] = 0 indicates that no error is detected in that character. |
| Na: | Number of characters contained in message A |
| message-B: | matrix containing characters of message B |
| err-det-B: | matrix containing an error-detecting flag of message A |
| Nb: | Number of characters contained in message B |

## Claims

1. A selective calling radio display pager including receiver means (2) for receiving a coded signal of error correcting format having an address and a corresponding message containing a series of characters; decoder means (3) for detecting an error in each of said characters of said received message, including means for identifying a group of successive characters as error-containing characters even if only one of the characters of the group is detected as being in error, and for producing a decoded message comprising error-free characters and error-containing characters; memory means (7) connected to said decoder means (3) for storing a first decoded message in a first memory and a second decoded message in a second memory; first comparing means (4, 101, 102) for comparing the number of the characters in the first memory with the number of characters in the second memory and for making a first decision if there is a match between said numbers; second comparing means (4, 103, 104) for comparing error-free characters in the first memory with positionally corresponding error-free characters in the second memory and for making a second decision if there is a match between all error-free characters of both memories; third comparing means (105, 106) for comparing all characters in the first memory with positionally corresponding characters in the second memory to detect mismatches and for making a third decision that both of the messages in the first and second memories are identical to each other if the number ($N_E$) of the detected mismatches is equal to or smaller than a prescribed percentage value ($N_A\theta$) of the number of characters in each of the memories; and replacement means (4, 107) for replacing the error containing characters in one of the first and second memories of memory means (7) with corresponding characters in the other memory when the first, second and third decisions are made by the first, second and third comparing means (4, 101, 102) (4, 103, 104) (105, 106).

2. A selective calling radio display pager as claimed in claim 1, wherein said coded signal has the format of BCH (Bose-Chandhuri-Hocquenghem) error correcting codes.

## Patentansprüche

1. Personenrufempfänger mit Anzeige für wahlweisen Funkruf mit einer Empfangseinrichtung (2) zum Empfangen eines codierten Signals eines Fehler korrigierenden Formats, das eine Adresse und eine entsprechende Nachricht mit einer Reihe von Zeichen aufweist, einer Decodiereinrichtung (3) zum Erkennen eines Fehlers in jedem Zeichen der empfangenen Nachricht, die eine Einrichtung zum Identifizieren einer Gruppe von aufeinanderfolgenden Zeichen als Fehler enthaltende Zeichen, selbst wenn nur ein Zeichen der Gruppe als fehlerhaft erkannt wird, und zum Erzeugen einer decodierten Nachricht mit fehlerfreien Zeichen und fehlerhaften Zeichen aufweist, einer Speichereinrichtung (7), die mit der Decodiereinrichtung (3) zum Speichern einer ersten decodierten Nachricht in einem ersten Speicher und einer zweiten decodierten Nachricht in einem zweiten Speicher verbunden ist, einer ersten Vergleicheinrichtung (4, 101, 102) zum Vergleichen der Zahl der Zeichen in dem ersten Speicher mit der Zahl der Zeichen in dem zweiten Speicher und zum Treffen einer ersten Entscheidung, wenn eine Übereinstimmung zwischen den Zahlen vorliegt, einer zweiten Vergleicheinrichtung (4, 103, 104) zum Vergleichen fehlerfreier Zeichen in dem ersten Speicher mit bezüglich der Position entsprechenden fehlerfreien Zeichen in dem zweiten Speicher und zum Treffen einer zweiten Entscheidung, wenn eine Übereinstimmung zwischen allen fehlerfreien Zeichen der beiden Speicher vorliegt, einer dritten Vergleicheinrichtung (105, 106) zum Vergleichen aller Zeichen in dem ersten Speicher mit bezüglich der Position entsprechenden Zeichen in dem zweiten Speicher zum Erkennen von Diskrepanzen und zum Treffen einer dritten Entscheidung, daß beide Nachrichten in dem ersten und dem zweiten Speicher miteinander identisch sind, wenn die Zahl ($N_E$) der erkannten Diskrepanzen gleich oder kleiner ist als ein bestimmter prozentualer Wert ($N_A\Theta$) der Zahl der Zeichen in jedem der Speicher, und einer Austauscheinrichtung (4, 107) zum Ersetzen der Fehler enthaltenden Zeichen in dem ersten oder dem zweiten Speicher der Speichereinrichtung (7) mit entsprechenden Zeichen in dem anderen Speicher, wenn die erste, zweite und dritte Entscheidung durch die erste, zweite und dritte Vergleicheinrichtung (4, 101, 102) (4, 103, 104) (105, 106) getroffen ist.

**2.** Personenrufempfänger mit Anzeige für wahlweisen Funkruf nach Anspruch 1, wobei das codierte Signal das Format des BCH (Bose-Chandhuri-Hocquenghem) Fehlerkorrekturcodes hat.

**Revendications**

**1.** Récepteur radio d'appel sélectif à affichage comportant un moyen de récepteur (2) pour recevoir un signal codé d'un format de correction d'erreur ayant une adresse et un message correspondants contenant une série de caractères ; un moyen de décodeur (3) pour détecter une erreur dans chacun desdits caractères dudit message reçu, comportant un moyen pour identifier un groupe de caractères successifs en tant que caractères contenant des erreurs même si seulement un des caractères du groupe est détecté comme étant en erreur, et pour produire un message décodé comprenant des caractères dépourvus d'erreurs et des caractères, contenant des erreurs ; un moyen de mémoire (7) connecté audit moyen de décodeur (3) pour mémoriser un premier message décodé dans une première mémoire et un second message décodé dans une seconde mémoire ; un premier moyen de comparaison (4, 101, 102) pour comparer le nombre de caractères dans la première mémoire au nombre de caractères dans la seconde mémoire et pour prendre une première décision s'il existe une concordance entre lesdits nombres ; un second moyen de comparaison (4, 103, 104) pour comparer les caractères dépourvus d'erreurs dans la première mémoire aux caractères dépourvus d'erreurs classés de manière correspondante dans la seconde mémoire et pour prendre une seconde décision s'il existe une concordance entre tous les caractères dépourvus d'erreurs des deux mémoires ; un troisième moyen de comparaison (105, 106) pour comparer tous les caractères dans la première mémoire avec les caractères placés de manière correspondante dans la seconde mémoire afin de détecter les désaccords et pour prendre une troisième décision que les messages dans les première et seconde mémoires sont identiques l'un à l'autre si le nombre ($N_E$) des désaccords détectés est égal à ou inférieur à un pourcentage prescrit ($NA\Theta$) du nombre des caractères dans chacune des mémoires ; et un moyen de remplacement (4, 107) pour remplacer les caractères contenant des erreurs dans une mémoire des première et seconde mémoires du moyen de mémoire (7) avec des caractères correspondants dans l'autre mémoire lorsque les première, seconde et troisième décisions sont prises par les premier, second et troisième moyens de comparaison (4, 101, 102) (4, 103, 104) (105, 106).

**2.** Récepteur radio d'appel sélectif à affichage selon la revendication 1, dans lequel ledit signal codé présente le format des codes de correction d'erreur BCH (Bose - Chandhuri - Hocquenghem).

# FIG.1

EP 0 280 405 B1

# FIG.2

Pager ID or Idle Signal

SC | F0 | F1 | F2 | F3

Pager ID

D1  D2  D3  D4

1 2 3 4 5 6 7 8 9 10 11 12 13 14 15 16 17 18 19 20 21 22 23 24 25 26 27 28 29 30 31 32

X1  X2  X3  ... CHECK BITS  EVEN PARITY BIT

X3  X4  X5  X6  ... CHECK BITS  EVEN PARITY BIT

X6  X7  X8  X9  ... CHECK BITS  EVEN PARITY BIT

X9  X10  X11  X12  ... CHECK BITS  EVEN PARITY BIT

Message Information: $X_1$ $X_2$ $X_3$ $X_4$ $X_5$ $X_6$ $X_7$ $X_8$ $X_9$ $X_{10}$($X_{11}$ $X_{12}$--$X_Y$)

A B C D E ↲ f g h i EOT EOT

Example

"A" "B" "C"
D1: 1 (1000001) (0100001) (1110000) (CHECK BITS) (EVEN PARITY BIT)

"D" "E" "↲"
D2: 1 (1) (0010001) (1010001) (01000) (CHECK BITS) (EVEN PARITY BIT)

"f" "g" "h"
D3: 1 (00) (0110011) (1110011) (0001) (CHECK BITS) (EVEN PARITY BIT)
EOT EOT

"i"
D4: 1 (011) (1001011) (0000100) (000) (CHECK BITS) (EVEN PARITY BIT)

# FIG.3A

```
                    START

                      │
                      ▼
         ┌──────────────────────────┐  ┐101
         │ COUNT CHARACTERS IN      │
         │ MESSAGES A ξ B TO        │
         │ OBTAIN COUNTS N_A, N_B   │
         └──────────────────────────┘
                      │
                      ▼
   NO            ◇ N_A = N_B ? ◇  ┐102
  ◄─────────────
                      │ YES
                      ▼
         ┌──────────────────────────┐  102... 103
         │ COMPARE BETWEEN ERROR-   │
         │ FREE CHARACTERS OF MES-  │
         │ SAGES A ξ B              │
         └──────────────────────────┘
                      │
                      ▼
  YES            ◇ MISMATCH ? ◇  ┐104
  ◄─────────────
                      │ NO
                      ▼
         ┌──────────────────────────┐  ┐105
         │ COMPARE BETWEEN ALL      │
         │ CHARACTERS OF MESSAGES   │
         │ A ξ B AND COUNT MIS-     │
         │ MATCHES TO OBTAIN N_E    │
         └──────────────────────────┘
                      │
                      ▼
   NO            ◇ N_E ≤ N_A·θ ? ◇  ┐106
  ◄─────────────
                      │ YES
                      ▼
        (1)                        (2)
```

$N_A = N_B$ ?

COMPARE BETWEEN ERROR-FREE CHARACTERS OF MESSAGES A ξ B

MISMATCH ?

COMPARE BETWEEN ALL CHARACTERS OF MESSAGES A ξ B AND COUNT MISMATCHES TO OBTAIN $N_E$

$N_E \leq N_A \cdot \theta$ ?

# FIG.3B

REPLACE ERROR-CONTAIN-ING CHARACTERS OF MESSAGE A WITH POSIT-IONALLY CORRESPONDING CHARACTERS OF MESSAGE B

107

REPLACE ERROR-CONTAIN-ING CHARACTERS OF MESSAGE B WITH POSITI-ONALLY CORRESPONDING CHARACTERS OF MESSAGE A

108

END

# FIG.4

| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 |
|---|---|---|---|---|---|---|---|---|---|---|---|---|---|---|---|---|---|---|---|---|---|---|---|---|---|---|
| MESSAGE A | a | b | c | d | e | <u>f</u> | <u>#</u> | <u>h</u> | i | j | k | l | <u>3</u> | n | o | p | q | r | s | <u>t</u> | <u>u</u> | <u>v</u> | w | x | y | z |
| MESSAGE B1 | a | b | c | d | | | | | | | | | | | | | | | | | | | | | | |
| MESSAGE B2 | <u>5</u> | b | c | d | e | f | g | h | i | j | k | $ | m | n | o | p | q | r | s | t | u | v | w | x | y | z |
| MESSAGE B3 | <u>a</u> | <u>b</u> | z | d | e | f | g | h | i | j | k | l | m | n | <u>$</u> | <u>p</u> | <u>q</u> | r | s | t | u | v | w | x | y | z |
| MESSAGE B4 | a | b | c | d | e | f | g | h | i | j | <u>k</u> | <u>l</u> | <u>%</u> | n | o | p | q | r | s | t | u | v | w | x | y | z |
| MESSAGE A' CORRECTED | a | b | c | d | e | f | g | h | i | j | k | l | <u>3</u> | n | o | p | q | r | s | t | u | v | w | x | y | z |
| MESSAGE B4' CORRECTED | a | b | c | d | e | f | g | h | i | j | k | l | <u>%</u> | n | o | p | q | r | s | t | u | v | w | x | y | z |

EP 0 280 405 B1

# FIG.5A

```
repeat_check(message_A,err_det_A,Na,message_B,err_det_B,Nb)
char       message_A[],message_B[];
int        err_det_A[].err_det_B[],Na,Nb;
{
        int      Ne,i;
        if ( Na != Nb ) return(-1);
        for(i=0; i<Na; i++)
                if(        (err_det_A[i]==0)   &&
                        (err_det_B[i]==0)   &&
                        (message_A[i]!=message_B[i])
                        )    return(-2);
        for(i=0,Ne=0; i<Na; i++)
                if( message_A[i]!=message_B[i] ) Ne++;
        if( Ne > Na*THRESHOLD )   return(-3);
        return(0);        /*  message A = message B (duplicate call)
}
```

EP 0 280 405 B1

# FIG.5B

```c
error_correct(message_A,err_det_A,Na,message_B,err_det_B,Nb)
char    message_A[],message_B[];
int     err_det_A[],err_det_B[],Na,Nb;
{
        int     i;
        for(i=0; i<Na; i++)
        {
                if( (err_det_A[i]==1) && (err_det_B[i]==0) )
                {
                        message_A[i]=message_B[i];
                        err_det_A[i]=0;
                }
                if( (err_det_B[i]==1) && (err_det_A[i]==0) )
                {
                        message_B[i]=message_A[i];
                        err_det_B[i]=0;
                }
        }
}
```

EP 0 280 405 B1